**Europäisches Patentamt**

**European Patent Office**

**Office européen des brevets**

(19)

(11) Publication number : **0 442 553 B1**

(12) # EUROPEAN PATENT SPECIFICATION

(45) Date of publication of patent specification :
08.03.95 Bulletin 95/10

(51) Int. Cl.⁶ : **G02F 1/39,** H04B 10/16, H01S 3/30

(21) Application number : **91200156.7**

(22) Date of filing : **26.01.91**

(54) Optical amplifier having a single-mode curved active fibre.

(30) Priority : **12.02.90 IT 1934190**

(43) Date of publication of application :
**21.08.91 Bulletin 91/34**

(45) Publication of the grant of the patent :
**08.03.95 Bulletin 95/10**

(84) Designated Contracting States :
**AT BE CH DE DK ES FR GB IT LI LU NL SE**

(56) References cited :
**EP-A- 0 189 196**
**US-A- 4 784 450**
**US-A- 4 941 726**

(73) Proprietor : **PIRELLI CAVI S.p.A.**
**Viale Sarca, 222**
**I-20126 Milano (IT)**

(72) Inventor : **Grasso, Giorgio**
**Via Canesi, 8**
**I-20052 Monza (Milano) (IT)**
Inventor : **Righetti, Aldo**
**Via Tolstoi, 49**
**I-20146 Milano (IT)**

(74) Representative : **Marchi, Massimo et al**
**c/o Marchi & Mittler s.r.l.**
**Viale Lombardia 20**
**I-20131 Milano (IT)**

EP 0 442 553 B1

## Description

The present invention relates to an optical amplifier, in particular for telecommunications lines, using an active fiber single-moded at the transmission wavelength only.

It is known that optical fibers having a doped core obtained by the use of particular substances such as rare earth ions, have stimulated-emission features adapted for use as laser sources and optical amplifiers.

In fact these fibers can be supplied with a light source of a particular wavelength, referred to as pumping wavelength, which is capable of bringing the dopant atoms to an excited energetic state, or pumping band, from which the atoms spontaneously decay within a very short period of time into a laser emission state, in which state they remain for a relatively long period of time.

When a fiber having a high number of atoms at the excited state in the laser emission level is passed through by a light signal having a wavelength corresponding to that laser emission state, the signal causes the transition of the excited atoms to a lower level, the light emission having the same wavelength as the signal; therefore a fiber of the above kind can be used in order to achieve an amplification of the signal and in particular, for example, to achieve optical line amplifiers adapted to bring an attenuated-transmission optical signal back to a high level after a long travel through a fiber in a telecommunications line.

Optical amplifiers of the above kind are for example known from EP-A-0 425 014 in the name of the same applicant, published on May, 2, 1991, in which the active fiber is provided to be of the single-mode type both at the transmission wavelength and at the pumping wavelength.

These fibers however, which are single-moded both at the transmission wavelength and pumping wavelength, have a different distribution of the luminous power in the fiber section and in particular the luminous power of the transmission signal is distributed over a greater area of the fiber section than the area in which the pumping power is present.

The fluorescent dopant, responsible for the transmission signal amplification, is concentrated in the fiber core and the fiber in known amplifiers is such designed that the pumping power be confined in said area too, so that it can be entirely used to excite the fluorescent dopant in the laser emission level; since however part of the transmission signal power is transmitted to the fiber outside the area in which the fluorescent dopant and pumping power are present, it results that only part of said signal is available in the fiber area in which it can be amplified.

The above phenomenon brings about a limitation in the amplification efficiency of the amplifier, meant as the gain of the transmission signal per pumping power unit.

Consequently the problem arises of increasing said efficiency with respect to known amplifiers.

The present invention aims at providing an amplifier in which the transmission signal power and the pumping power have a substantially similar distribution in the active fiber section and are also concentrated in the fiber area in which the fluorescent dopant is present.

It is an object of the present invention to provide an optical amplifier, as defined in claim 1.

The bending radius of the curved active fiber is in the range of 20 to 140 mm and preferably the bending radius of the active fiber ranges between 35 and 100 mm.

In a preferred embodiment the optical signal wavelength is between 1520 and 1570 nm and the pumping radiation wavelength is 980 nm ($\pm$ 10 nm) and the fluorescent dopant in the active fiber is erbium.

In particular the active fiber has at least a curved portion having a bending radius such that said fiber provides only single mode propagation the fundamental mode at the pumping radiation wavelength, which portion is contiguous to non-curved fiber portions, the length of the curved portion or the sum of the curved portion lengths being higher than 70% of the overall length of the active fiber.

Preferably the active fiber exhibits a single continuous curved portion with a bending radius such that said fiber provides only single mode propagation of the fundamental mode at the pumping radiation wavelength, portions of non-curved fiber being present at either or both ends of the active fiber.

In a particularly preferred embodiment of an optical amplifier in accordance with the invention the active fiber is curved with a bending radius such that said fiber provides only single mode propagation of the fundamental mode at the pumping radiation wavelength over the whole length thereof, apart from the substantially devoid-of-curve end portions, having each a length lower than 400 mm; preferably the length of the substantially devoid-of-curve end portions is lower than 200 mm.

Further details will be drawn from the following description of the invention, with reference to the accompanying drawings, in which:

- Fig. 1 is a diagram showing an optical amplifier using an active fiber;
- Fig. 2 is a diagram showing the energetic transitions of a fiber of the type to be used for an amplifier according to the diagram of Fig. 1, which transitions are adapted to generate a stimulated (laser) emission;

- Fig. 3 is a diagram showing the arrangements relating to the pumping, transmission and cut-off wavelengths;
- Fig. 4 is a diagram showing the radial distribution of the light intensity in an optical fiber;
- Fig. 5 is a sketch of an active fiber arrangement in an amplifier in accordance with the invention;
- Fig. 6 is a front view of the fiber shown in Fig. 5;
- Fig. 7 is a diagram showing the variations in the mode diameter in a fiber, depending upon the wavelength;
- Fig. 8 is a diagram showing the gain in an optical amplifier depending upon the length of the active fiber used.

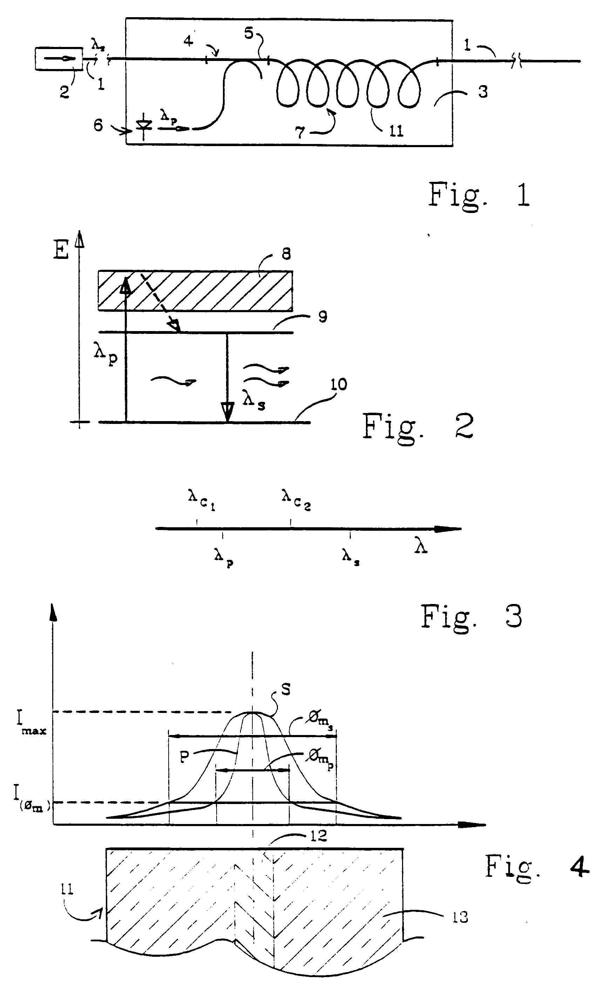

For the purpose of amplifying signals in optical telecommunications fibers, amplifiers employing optical fibers can be conveniently used; the structure of said amplifiers is diagrammatically shown in Fig. 1, in which 1 denotes an optical telecommunications fiber to which an optical signal of a wavelength $\lambda_s$, generated by a signal laser emitter 2 is sent; the signal, being attenuated after a certain line length, is sent to an optical amplifier 3, substantially consisting of a dichroic coupler 4 where it is joined on a single outgoing fiber 5, to a pumping radiation of wavelength $\lambda_p$, generated by a pumping laser emitter 6; an active fiber 7 connected to the fiber 5 issuing from the coupler, constitutes the signal amplifying element which is then introduced again into the line fiber 1 and goes on towards its destination.

In order to produce the active fiber 7 generating the amplification of the light signal, a silica-based optical fiber is used, which is doped with a fluorescent material adapted to generate a light emission which is stimulated in the presence of a light signal that is thus amplified thereby.

As the fluorescent material, it is convenient to use $Er_2O_3$ which can have stimulated transitions, also referred to as "laser" transitions, at wavelengths that are convenient for the remote transmission of telecommunications signals.

As shown in the diagram of Fig. 2 relating to a fiber of the above type symbolically representing the available energetic states for an erbium ion solution in the fiber silica-based matrix, the introduction of a light power into the active fiber at the "pumping" wavelength $\lambda_p$, lower than the wavelength $\lambda_s$ of the optical signal, brings a certain number of $Er^{3+}$ ions present as the dopant in the fiber glass-based matrix, to an "excited" energetic state 8, referred to as "pumping" band, from which state ions spontaneously decay into an energetic level 9 constituting a laser emission level.

It is known that, while the transition from band 8 to level 9 is associated with a thermal-type emission, which is dispersed outside the fiber (phonon radiation), the transition from level 9 to the base level 10 generates a light emission of a wavelength corresponding to the energetic value of the laser emission level 9; if a fiber containing a high amount of ions at the laser emission level is passed through by a signal of a wavelength corresponding to such an emission level, the signal causes the stimulated transition of the concerned ions from the emission state to the base state before the spontaneous decay thereof, with a cascade phenomenon producing the emission of a greatly amplified transmission signal at the outlet of the active fiber.

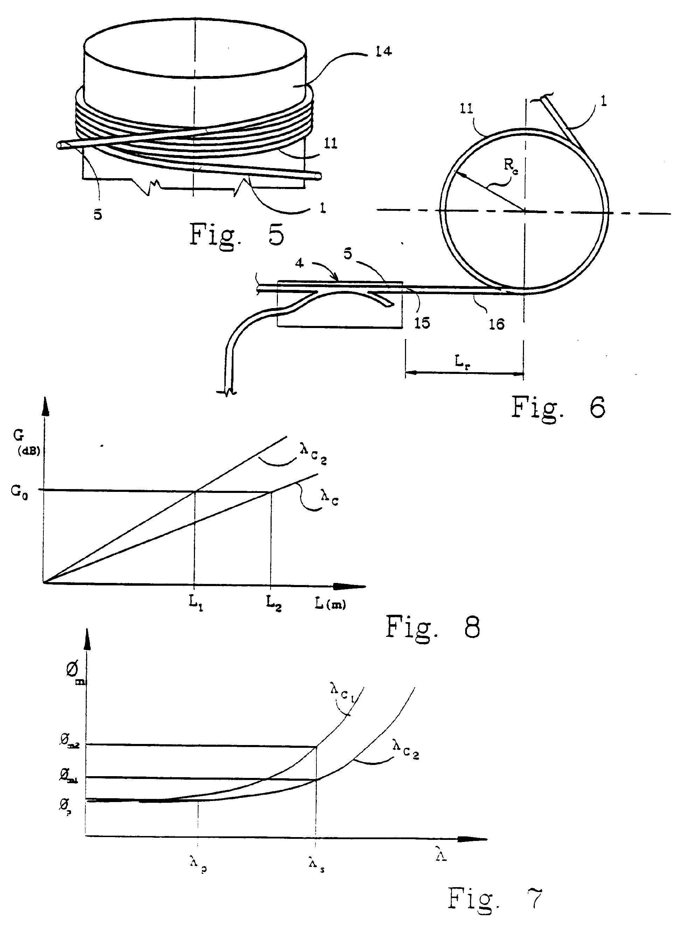

Diagrammatically shown in fig. 4 is the end of a fiber seen in axial section and denoted by 11; a core 12 and a cladding 13 are defined for such a fiber and they are identified by different refractive indices.

For use purposes as the active fiber in an amplifier, the dopant, that is $Er^{3+}$, is present within the core 12.

In order to achieve a high amplification gain, it is convenient that the active fiber 7 in the amplifier be of the single-mode type both at the wavelength of the optical signal and the pumping wavelength, as disclosed in EP-A-0 425 014 in the name of the same applicant.

The foregoing means, as shown in Fig. 3, that based on the teachings contained in said patent the active fiber is such sized that the fiber cut-off wavelength $\lambda_{c1}$, also referred to as "$\lambda_{cut\text{-}off}$" above which the propagation of the fundamental mode alone occurs in the fiber, is both lower than the wavelength of the optical signal $\lambda_s$, and lower than the wavelength of the pumping radiation $\lambda_p$.

The important measurements for the purpose of selecting the cut-off wavelength of the fiber are substantially the numerical aperture NA and core diameter thereof.

The numerical aperture NA of a fiber having a refractive index profile substantially of the "step index" type or the like is defined as:

$$NA = (n_1^2 - n_2^2)^{1/2}$$

where $n_1$ is the refractive index of the fiber core and $n_2$ is the refractive index of the fiber cladding.

It is known that the desired refractive indices of the fiber core and cladding can be achieved by selecting the concentration in the core and cladding themselves of the primary dopant, or index variator dopant, introduced into the preform from which the fiber is obtained through well-known techniques.

The dopants used for the purpose usually consist of $GeO_2$ or $Al_2O_3$.

Within the fiber, a light radiation having a wavelength for which there is a single-mode propagation in the fiber, that is higher than the fiber cut-off wavelength, exhibits a radial distribution of the light intensity of the

EP 0 442 553 B1

type shown in Fig. 4 by curves P and S the development of which is substantially of the Gauss type, with a maximum intensity $I_{max}$ along the fiber axis and decreasing values as far as zero towards the fiber periphery.

Based on the above distribution a mode diameter $\phi_m$ is defined as the diameter at which there is a light intensity $I(\phi_m)$ in the fiber:

$$I(\phi_m) = \frac{1}{e^2} I_{max},$$

where $I_{max}$ is the maximum light intensity in the fiber, based on specifications CCITT G.652 (Consultative Committee International Telegram and Telephone).

As is apparent from the drawing, most of the transmitted light power is substantially confined within the mode diameter.

For the purpose of an efficient amplification it is of great importance to have a high density of the pumping power in the fiber core 12, where the fluorescent dopant is present, so that a high population inversion in the dopant can be kept, that is a high percentage of dopant atoms available for amplification at the higher laser level 9, as compared with those at the base state 10; the pumping power transmitted outside the core where no dopant is present, is substantially inactive to the ends of the dopant inversion at the higher laser level.

The optical signal, in turn, should have a radial-distribution intensity in the fiber similar to that of the pumping signal, for the purpose of being transmitted to the fiber region in which most of the luminous pumping power is present, so that it can be efficiently amplified.

To this end therefore the mode diameters of the pumping signal and optical signal should be as similar as possible.

In an optical fiber of the type having the core 12 and cladding 13 as shown in Fig. 4 in alignment with the diagrams of the radial light intensity distribution of pumping and transmission signals, the mode diameter $\phi_s$ at the optical signal wavelength $\lambda_s$, the curve of the radial light intensity distribution of which is represented by line S in the drawing, is remarkably greater than the mode diameter $\phi_p$ at the pumping radiation wavelength $\lambda_p$, with the intensity curve P, and substantially corresponding to the core 12 diameter; the above means that an important part of the light signal does not propagate into the area of the active fiber to which the pumping energy is supplied and in which the dopant is present.

In fact it is to be noted that the mode diameter which for wavelength values close to the cut-off wavelength $\lambda_c$ of the fiber is substantially constant and not very different from the core diameter of the fiber itself, for greater $\lambda$ values greatly increases, as shown in Fig. 7: therefore, in order to ensure that the fiber be single-mode at the pumping radiation wavelength $\lambda_p$, for example in the case of amplifiers having an erbium-doped active fiber, at 980 nm ($\pm$ 10%), a fiber having a cut-off wavelength $\lambda_c$ lower than 980 nm must be used and therefore a very high mode diameter at the optical signal wavelength $\lambda_s$ is achieved, which is by far greater than the mode diameter at the pumping radiation wavelength $\lambda_p$, so that most of the optical signal does not propagate into the fiber area in which it can be amplified.

The above behaviour occurs when the active fiber has a rectilinear or substantially rectilinear configuration, where the term "substantially rectilinear configuration" means that the fiber is not submitted to geometrical deformations capable of greatly modifying the optical behaviour thereof; for said reason, in accordance with the specifications (CCITT, Instruction G.652), it is provided to evaluate the theoretical cut-off wavelength based on the profile of the refractive index in the fiber, and cut-off wavelengths in operating conditions.

In particular said specifications take into account the possibility of measuring a cut-off wavelength for a wired fiber, the measurement being carried out on a single fiber ring of a radius of 140 mm; the detected variation in the cut-off wavelength in these conditions as compared with the theoretical value is, on the other hand, rather small, a difference lower than about 5% with respect to the theoretical cut-off wavelength being expected.

In accordance with the present invention the active fiber of the amplifier is selected of the single-mode type at the optical signal wavelength $\lambda_s$ alone, that is having a value of cut-off wavelength $\lambda_{c2}$ lower than $\lambda_s$, but substantially higher than $\lambda_p$, as shown in Fig. 3.

With said fiber the mode diameter at the optical signal wavelength, particularly in the range between 1520 and 1570 nm, adapted for the use of amplifiers having an erbium-doped active fiber, being the optical signal wavelength close to the cut-off wavelength, appears to be sufficiently small, substantially close to the diameter of the fiber core; the fundamental mode of the pumping radiation, in turn, has a diameter close to that of the fiber core and therefore the optical signal power is maintained substantially confined within the fiber area in which the pumping radiation and active dopant are present.

The active fiber is disposed in a curved configuration over the whole length thereof, in the form of coils constituting the amplifier, as shown in Figs. 5 and 6, for example wound around a cylindrical support or the like: the fiber bending is selected in accordance with the present invention with a radius $R_c$ substantially lower than 140 mm, such as to permit only single mode propagation of the fundamental mode within the fiber even

4

for wavelengths lower than the above mentioned wavelength $\lambda_{c2}$ and in particular even for the pumping radiation wavelength $\lambda_p$.

The fiber bending in fact causes the same to transmit the fundamental mode alone for wavelengths that are increasingly smaller as the bending imparted to the fiber becomes more marked, that is as $R_c$ becomes smaller; therefore it is possible to define a bending radius $R_p$ under which, for a given wavelength and in particular for the pumping radiation wavelength, the only propagation of the fundamental mode within the fiber is possible.

The bending radius $R_c$ adopted for the active fiber is to be therefore lower than or equal to the above radius $R_p$; practically, since the bending can be caused by a mechanical weakening of the fiber structure, making it liable to breakages or crackings, preferably a bending radius equal to $R_p$ or close thereto is used.

The choice of an appropriate value for said bending enables modes higher than the pumping radiation wavelength to be eliminated from the active fiber, so that within the fiber the fundamental mode of the pumping radiation alone is driven, while keeping a cut-off wavelength giving rise to a small mode diameter in the fiber at the optical signal wavelength.

In this manner it is possible to achieve a particularly high amplification efficiency, that is a high amplification gain per supplied pumping power unit, so that a fiber of shorter length can be used to achieve the desired amplification, as shown in Fig. 8, in which one can see that a gain $G_0$ can be reached with an active fiber of length $L_1$, using a fiber of a cut-off length $\lambda_{c2} > 980$ nm, greatly lower than the length $L_2$ necessary to achieve the same gain with a fiber having a cut-off wavelength $\lambda_{c1} < 980$ nm.

In the dichroic coupler 4 produced on the basis of the teachings disclosed in the above mentioned EP-A-0 425 014, the transport fiber 5 of the optical signals coupled to the pumping radiation is of the single-mode type at both wavelengths; this fiber has therefore a mode diameter at the optical signal wavelength $\lambda_s$ higher than the mode diameter in the active fiber in accordance with the invention; the welding between fibers 5 and 11 exhibits an attenuation at the optical signal wavelength, due to such a diameter difference.

A further light attenuation occurs in the welding between the active fiber and the line fiber 1; in fact although the commercially available fibers used as line fibers are of the single-mode type at the optical signal wavelength alone, in said range between 1520 and 1570 nm, they have a rather high mode diameter, for the purpose of achieving easy joinings and the like, equal to or greater than the mode diameter of the coupler fiber 5.

The overall gain $G_{ex}$ in an amplifier is given by the inner gain of the active fiber $G_{in}$, minus losses or attenuations $A_s$ due to the weldings between the different fibers: in order to achieve this result therefore a gain $G_{in} = G_{ex} + A_s$ is required from the active fiber.

The use of a fiber in accordance with the present invention, having a very small mode diameter, introduces greater losses due to welding as compared with known active fibers which are single-mode also at the wavelength $\lambda_p$, but these additional losses generally appear negligible as compared with the obtained efficiency increase.

The minimum bending radius $R_c$ of the active fiber of appropriate use is higher than about 20 mm and under this radius the mechanical strength of the curved fiber becomes critical and in addition the welding losses at the junctions take important values, due to the great difference between the mode diameters of the active fiber and line fiber or the fiber coming out of the coupler, whereas bending radii higher than 140 mm are of little utility for achieving an important shifting of the cut-off wavelength; preferably $R_c > 35$ mm and more preferably $50\,mm \leq R_c \leq 100\,mm$.

In connection with said bending radii the maximum value of a cut-off wavelength under rectilinear conditions, enabling the single-mode propagation of the pumping radiation at 980 nm to be achieved when the fiber is curved to a corresponding bending radius, without reaching said critical values as regards the mechanical strength of the fiber itself is $\lambda_c$ = about 1280 nm, corresponding to a mode diameter of about 4 μm; with a bending radius $R_c$ of 50 mm said cut-off wavelength value is $\lambda_c$ = about 1100 nm, the mode diameter being equal to about 5.3 μm, whereas the fundamental mode of the pumping radiation has a diameter of about 3.8+4 μm.

For a single-mode fiber in rectilinear conditions at the pumping radiation wavelength, the mode diameter at the wavelength of the optical signal is higher than 6 μm.

For the best use of the active fiber qualities in the amplifier in accordance with the invention it is the overall length of the active fiber that should preferably be curved to the provided bending radius, that is the active fiber must be disposed in a curved configuration, for example wound to form coils on the respective support, as diagrammatically shown in Fig. 5, immediately downstream of the joining by welding 15 to the coupler fiber 5.

Should not the above be possible or desirable, for example in order to avoid the bending stresses given by the curved configuration of the active fiber being transmitted to the welding 15, which usually constitutes a mechanical weakening point in the fiber, as shown in Fig. 6 the presence of a non-curved portion 16 of active fiber can be accepted, which expedient does not involve a substantial reduction in the advantages given by the active fiber bending.

Preferably the length $L_r$ of the rectilinear or substantially rectilinear active fiber portion 16, that is having a bending radius greater than $R_c$ as defined above immediately downstream of the coupler, is lower than 400 mm and more preferably $L_r \leqq 200$ mm; such a substantially rectilinear fiber length can also be accepted at the opposite end of the active fiber, close to its joining to the line fiber, without the amplification efficiency being greatly impaired.

In fact the coupling of the higher modes in the fiber takes place proportionally to the travel length in the fiber itself and therefore after a portion of the stated length no important pumping power transfer takes place in the active fiber from the fundamental mode to higher modes.

On the other hand, useful results, that is an increase in the amplification efficiency with respect to amplifiers having a single-mode active fiber at the pumping wavelength too can also be obtained, in accordance with the present invention, with an active fiber which is bent only over a portion of the length thereof, should this be needed for meeting requirements of different origin, provided that the portion of bent fiber at the bending radius corresponding to the propagation of the fundamental mode alone of the pumping power, be higher than 70% of the overall fiber length.

For construction purposes, in particular for keeping the bulkiness of the amplifier structure within reduced limits, the bent fiber portion constitutes the middle portion of the active fiber, whereas the leading and trailing fiber portions, contiguous to the end weldings of the fiber itself, can also have a rectilinear extension; however, due to particular requirements, the active fiber may also have several bent portions alternated with substantially rectilinear portions.

By way of example an erbium-doped active fiber having the following characteristics has been prepared:

| | |
|---|---|
| Core diameter | $3.6$ $\mu$m |
| Numerical aperture $(n_1{}^2 - n_2{}^2)^{1/2}$ | $0.23$ |
| $\lambda_c$ (theoretical cut-off wavelength) | $1100$ nm |
| Signal mode diameter | $5.3$ $\mu$m |
| Erbium content (weight of $Er_2O_3$) | $350$ ppm |

With the above fiber an amplifier in accordance with the diagram shown in Fig. 1 has been accomplished, in which the fiber has been bent to form contiguous coils having a bending radius R = 50 mm over the whole length thereof; under these conditions a value of the cut-off wavelength has been measured:

$$\lambda_c(R) \text{ (cut-off wavelength on radius R)} \quad 980 \text{ nm}$$

The fiber-using amplifier had the following features:

| | |
|---|---|
| Pumping power | $17$ mW |
| Length of the active fiber | $8.4$ m |

The amplifier has been connected to a line fiber having a cut-off wavelength $\lambda_c$ (F) = 1100 nm, giving a transmission signal to be amplified in power:

$$\text{Power of the incoming signal} \quad - 45 \text{ dBm}$$

The amplifier's optical coupler had the fiber carrying the optical signal and pumping radiation of a cut-off wavelength

$$\lambda_c \text{ (A)} = 980 \text{ mm.}$$

Due to the described configuration the following amplification gain has been achieved:

$$G_1 \qquad\qquad\qquad 30 \text{ dB.}$$

For comparison an amplifier having the same structural arrangement has been accomplished, using an active fiber having the following features:

| | |
|---|---|
| Core diameter | 3.6 μm |
| Numerical aperture $(n_1^2 - n_2^2)^{1/2}$ | 0.21 |
| $\lambda_c$ (theoretical cut-off wavelength) | 980 nm |
| Signal mode diameter | 6.2 μm |
| Erbium content (weight of $Er_2O_3$) | 350 ppm |

The fiber has been used in the amplifier under substantially rectilinear conditions, in the sense previously shown, so as to induce important variations in the cut-off wavelength thereof.

The amplifier had the following features:

| | |
|---|---|
| Pumping power | 20 mW |
| Length of the active fiber | 10 m |

The signal to be amplified, carried by an active fiber similar to the one of the preceding example had the following power:

| | |
|---|---|
| Power of the incoming signal | - 45 dBm |

The following amplification gain has been achieved:

| | |
|---|---|
| $G_2$ | 30 dB. |

As can be seen, the amplifier in accordance with the invention has been capable of supplying the same amplification gain as the comparative amplifier using a substantially rectilinear fiber, although a portion of active fiber of shorter length and lower pumping power has been used, thereby showing a remarkably greater efficiency.

The support structure for the coiled fiber turns, adapted to keep them at the provided bending radius, can be of any kind, also depending upon the structural features of the amplifier envelope, and it is not therefore described in detail.

Many variations can be made without departing from the scope of the general features of the present invention.

**Claims**

1. An optical amplifier insertable in series in an optical fiber telecommunication line for amplifying optical signals propagating in this fiber line, comprising
   at least a luminous pumping source (6) for generating optical radiation having a wavelength shorter than that of said optical signal,
   an active optical fiber (7) containing a fluorescent dopant in its optical core, being capable to emit light in the wavelength range of the optical signal when pumped at the wavelength of the pumping source, and
   a dichroic coupler (4) having two inputs connected to the optical fiber line and to the luminous pumping source respectively, and an output (5) connected to one end of said active fiber,
   wherein
   the active optical fiber (7) is a fiber that when arranged in a substantially rectilinear configuration permits single-mode propagation at the wavelength of the optical signal and multi-mode propagation at the pumping radiation wavelength and in that the active fiber is disposed in a curved configuration at least over 70% of its overall length, with a bending radius such that said fiber provides only single mode propagation of the fundamental mode at the pumping radiation wavelength.

2. An optical amplifier according to claim 1, characterized in that the active fiber (7) is curved so as to have its bending radius in the range of 20 to 140 mm.

3. An optical amplifier according to claim 2, characterized in that the bending radius of the active fiber ranges between 35 and 100 mm.

4. An optical amplifier according to claim 1, characterized in that the optical signal wavelength is in the range of 1520 to 1570 nm and the pumping radiation wavelength is 980 nm ($\pm$ 10 mm) and the fluorescent dopant in the active fiber is erbium.

5. An optical amplifier according to claim 1, characterized in that the active fiber (7) exhibits at least a curved portion (11) having a bending radius such that said fiber provides only single mode propagation of the fundamental mode at the pumping radiation wavelength, which portion is contiguous to non-curved fiber portions (16), the length of the curved portion or the sum of the curved portion lengths being more than 70% of the overall length of the active fiber.

6. An optical amplifier according to claim 5, characterized in that the active fiber (7) exhibits a single continuous curved portion (11) having a bending radius such that said fiber provides only single mode propagation of the fundamental mode at the pumping radiation wavelength, non-curved fiber portions (16) being present at either or both of the active fiber ends.

7. An optical amplifier according to claim 6, characterized in that the active fiber (7) is curved according to a bending radius such that said fiber provides only single mode propagation of the fundamental mode at the pumping radiation wavelength over the whole length thereof, apart from the end portions (16), which are substantially devoid of bending and have each a length less than 400 mm.

8. An optical amplifier according to claim 7, characterized in that the end portions (16) that are substantially devoid of bending have a length less than 200 mm.

## Patentansprüche

1. In Reihe in eine Faser-Nachrichtenübertragungsleitung einfügbarer optischer Verstärker zum Verstärken sich in der Faserleitung ausbreitender optischer Signale mit

wenigstens einer Pumplichtquelle (6) zum Erzeugen einer optischen Strahlung mit einer Wellenlänge, die kürzer ist als die des optischen Signals,

einer aktiven optischen Faser (7), in deren optischem Kern ein fluoreszierendes Dotiermittel enthalten ist, die Licht im Wellenlängenbereich des optischen Signals emittieren kann, wenn bei der Wellenlänge der Pumplichtquelle eingepumpt wird, und

einem dichroitischen Koppler (4) mit zwei an die optische Faserleitung bzw. die Pumplichtquelle angeschlossenen Eingängen und einem an ein Ende der aktiven Faser angeschlossenen Ausgang (5), wobei

die aktive optische Faser (7) in im wesentlichen geradliniger Ausrichtung eine Einmoden-Ausbreitung bei der Wellenlänge des optischen Signals und eine Mehrmoden-Ausbreitung bei der Wellenlänge der Pumpstrahlung gestattet, und wobei die aktive Faser über wenigsten 70% ihrer Gesamtlänge gekrümmt angeordnet ist, mit einem Krümmungsradius, bei dem die Faser nur eine Einmoden-Ausbreitung des Grundmodus bei der Wellenlänge der Pumpstrahlung zuläßt.

2. Optischer Verstärker nach Anspruch 1, dadurch gekennzeichnet, daß die aktive Faser (7) so gekrümmt ist, daß ihr Krümmungsradius im Bereich von 20 bis 140 mm liegt.

3. Optischer Verstärker nach Anspruch 2, dadurch gekennzeichnet, daß der Krümmungsradius der aktiven Faser im Bereich von 35 bis 100 mm liegt.

4. Optischer Verstärker nach Anspruch 1, dadurch gekennzeichnet, daß die Wellenlänge des optischen Signals im Bereich von 1520 bis 1570 nm und die Wellenlänge der Pumpstrahlung bei 980 nm ($\pm$ 10 nm) liegt und das fluoreszierende Dotiermittel in der aktiven Faser Erbium ist.

5. Optischer Verstärker nach Anspruch 1, dadurch gekennzeichnet, daß die aktive Faser (7) wenigstens einen gekrümmten Bereich (11) aufweist, dessen Krümmungsradius so bemessen ist, daß die Faser nur eine Einmoden-Ausbreitung des Grundmodus bei der Wellenlänge der Pumpstrahlung zuläßt, wobei dieser Bereich an nicht gekrümmten Faserbereichen (16) anliegt und die Länge des gekrümmten Bereichs oder die Summe der Längen der gekrümmten Bereiche größer als 70% der Gesamtlänge der aktiven Faser ist.

6. Optischer Verstärker nach Anspruch 5, dadurch gekennzeichnet, daß die aktive Faser (7) einen einzigen durchgehenden gekrümmten Bereich (11) mit einem Krümmungsradius aufweist, derart, daß die Faser nur eine Einmoden-Ausbreitung des Grundmodus bei der Wellenlänge der Pumpstrahlung zuläßt, und wobei die gekrümmten Faserbereiche (16) an einem oder an beiden Enden der aktiven Faser vorgesehen sind.

7. Optischer Verstärker nach Anspruch 6, dadurch gekennzeichnet, daß die aktive Faser (7) mit einem Krümmungsradius gekrümmt ist, bei dem die Faser nur eine Einmoden-Ausbreitung des Grundmodus bei der Wellenlänge der Pumpstrahlung über ihre gesamte Länge zuläßt, an von den Endbereichen (16) entfernten Stellen, die biegungsfrei sind und je eine Länge von weniger als 400 mm aufweisen.

8. Optischer Verstärker nach Anspruch 7, dadurch gekennzeichnet, daß die im wesentlichen biegungsfreien Endbereiche (16) eine Länge von weniger als 200 mm aufweisen.

## Revendications

1. Un amplificateur optique pouvant être inséré en série dans une ligne de télécommunication par fibres optiques pour amplifier des signaux optiques propagés dans cette ligne à fibres optiques, comprenant

au moins une source de pompage lumineuse (6) pour émettre une radiation optique ayant une longueur d'onde inférieure à celle dudit signal optique,

une fibre optique active (7) contenant un dopant fluorescent dans son coeur optique, capable d'émettre une lumière dans la gamme de longueurs d'onde du signal optique lors d'un pompage à la longueur d'onde de la source de pompage, et

un coupleur dichroïque (4) comprenant deux entrées reliées, respectivement, à la ligne à fibre optique et à la source de pompage lumineuse, et une sortie (5) reliée à une extrémité de ladite fibre active,

dans lequel

la fibre optique active (7) est une fibre qui, lorsqu'elle est disposée selon une configuration sensiblement rectiligne, permet une propagation monomode à la longueur d'onde du signal optique et une propagation multimode à la longueur d'onde de radiation de pompage et la fibre active est disposée selon une configuration incurvée, au moins sur 70 % de sa longueur totale, avec un rayon de courbure tel que ladite fibre n'assure qu'une propagation monomode de mode fondamental à la longueur d'onde de radiation de pompage.

2. Un amplificateur optique selon la revendication 1, caractérisé en ce que la fibre active (7) est incurvée de manière que son rayon de courbure soit dans la gamme de 20 à 40 mm.

3. Un amplificateur optique selon la revendication 2, caractérisé en ce que le rayon de courbure de la fibre active est compris entre 35 et 100 mm.

4. Un amplificateur optique selon la revendication 1, caractérisé en ce que la longueur d'onde du signal optique est dans la gamme de 1520 à 1570 nm et que la longueur d'onde de radiation de pompage est de 980 nm (± 10 nm) et que le dopant fluorescent de la fibre active est de l'erbium.

5. Un amplificateur optique selon la revendication 1, caractérisé en ce que la fibre active (7) présente, au moins, une partie incurvée (11) ayant un rayon de courbure tel que ladite fibre n'assure qu'une propagation monomode en mode fondamental à la longueur d'onde de radiation de pompage, ladite partie étant contiguë à des parties de fibre non incurvées (16), la longueur de la partie incurvée ou la somme des longueurs des parties incurvées étant supérieure à 70 % de la longueur totale de la fibre active.

6. Un amplificateur optique selon la revendication 5, caractérisé en ce que la fibre active (7) présente une partie incurvée continue unique (11) ayant un rayon de courbure tel que ladite fibre n'assure qu'une propagation monomode en mode fondamental à la longueur d'onde de radiation de pompage, des parties de fibre non incurvées (16) étant présentes à l'une ou aux deux extrémités de la fibre active.

7.  Un amplificateur optique selon la revendication 6, caractérisé en ce que la fibre active (7) est incurvée à un rayon de courbure tel que ladite fibre n'assure qu'une propagation monomode en mode fondamental à la longueur d'onde de radiation de pompage sur toute sa longueur, exception faite des parties d'extrémité (16) qui sont sensiblement exemptes de courbures et qui ont chacune une longueur inférieure à 400 mm.

8.  Un amplificateur optique selon la revendication 7, caractérisé en ce que les parties d'extrémité (16) qui sont sensiblement exemptes de courbures ont longueur inférieure à 200 mm.

Fig. 1

Fig. 2

Fig. 3

Fig. 4

11

EP 0 442 553 B1

Fig. 5

Fig. 6

Fig. 8

Fig. 7

12